Europäisches Patentamt

European Patent Office

Office européen des brevets

(11) Numéro de publication: **0 101 049**
**B1**

## FASCICULE DE BREVET EUROPEEN

(45) Date de publication du fascicule du brevet: **07.01.87**

(51) Int. Cl.⁴: **G 01 B 11/06**

(21) Numéro de dépôt: **83107845.6**

(22) Date de dépôt: **09.08.83**

(54) **Dispositif de contrôle d'épaisseur de couches minces faiblement absorbantes.**

(30) Priorité: **12.08.82 FR 8214034**

(43) Date de publication de la demande:
**22.02.84 Bulletin 84/08**

(45) Mention de la délivrance du brevet:
**07.01.87 Bulletin 87/02**

(84) Etats contractants désignés:
**AT BE CH DE FR GB IT LI LU NL SE**

(56) Documents cités:
**GB-A-2 029 017**
**US-A-4 208 240**

(73) Titulaire: **ALCATEL**
**12, rue de la Baume**
**F-75008 Paris (FR)**

(72) Inventeur: **Canteloup, Jean**
**18, allée des Pommiers**
**F-91310 Montlhery (FR)**

(74) Mandataire: **Weinmiller, Jürgen et al**
**Lennéstrasse 9**
**D-8133 Feldafing (DE)**

Courier Press, Leamington Spa, England.

## Description

La présente invention est relative à un contrôleur optique d'épaisseur de couches minces diélectriques faiblement absorbantes sur un substrat totalement ou partiellement réfléchissant. Elle peut être utilisée comme un dispositif très fiable de détection de fin d'attaque dans un processus de gravure intervenant dans la fabrication des circuits électroniques. Elle peut également s'appliquer au contrôle de l'épaisseur d'un dépôte d'une couche mince sur un substrat. L'exemple choisi est celui de la gravure, au moyen de plasma réactif, d'une couche de silicium polycristallin déposée su une couche support en silice et partiellement protégée par masque de résine. La gravure doit prendre fin au moment où le silicium non protégé par la résine vient à disparaître.

Le moment de fin d'attaque doit être déterminé avec précision sous peine d'attaquer insuffisamment la couche de silicium polycristallin (alors le circuit électronique ne fonctionnera pas) ou de l'attaquer trop (ce qui entraîne le phénomène dit de sous-gravure).

Le document US—A—4 208 240 décrit un dispositif de contrôle de l'épaisseur d'une couche mince sur un support par l'intermédiaire d'un rayonnement monochromatique dirigé sur la couche, dans lequel, le faisceau lumineux est réfléchi par la couche en cours de gravure et capté par un détecteur qui produit un signal électrique proportionnel à l'intensité lumineuse reçue. Il est ensuite élaboré au signal proportionnel à la dérivée dudit signal électrique et cette dérivée est comparée à un signal prédéterminé indicatif de la fin de la gravure. Lorsque la dérivée est égale audit signal, le processus de gravure est automatiquement arrêté.

On sait en effet qu'en raison de phénomènes d'interférences lumineuses que subit la lumière réfléchie sur le couches diélectriques, le signal électrique émis par le détecteur est un signal ondulé qui croît de manière continu à partir de la disparition de la couche attaquée.

La comparaison de la dérivée du signal avec un signal étalon permet donc de connaîre le moment de la fin de la gravure.

Un tel dispositif résoud bien ce problème posé; mais la valeur du signal électrique fourni par le détecteur dépend de la valuer de l'intensité lumineuse de la source lumineuse. Or celle-ci peut être sujette à des fluctuations dues en particulier aux conditions ambiantes.

Ces variations de l'intensité du faisceau lumineux peuvent conduire à des erreurs d'interprétation du signal terminal et à un manque de reproductibilité.

Un but de la présente invention est de réaliser un dispositif de détection de contrôle d'épaisseur indépendant des variations de l'intensité de la source lumineuse.

L'invention a pour objet un dispositif de contrôle d'épaisseur d'une couche mince faiblement absorbante sur un support partiellement ou totalement réfléchissant, par l'intermédiaire d'un faisceau lumineux monochromatique on quasi monochromatique dirigé sur la couche à graver, caractérisé en ce qu'il comprend:

—un séparateur de lumière partageant le faisceau en deux parties, une première partie étant dirigée sur un premier convertisseur optoélectronique linéaire fournissant un premier signal électrique, une seconde partie du faisceau étant dirigée sur la couche, s'y réfléchissant et étant dirigée sur un second convertisseur optoélectronique linéaire fournissant un second signal électrique,

—un moyen pour effectuer le rapport du second signal électrique au premier signal électrique,

—un moyen pour obtenir la dérivée dudit rapport,

—un moyen pour fournir un signal lorsque ladite dérivée est restée comprise, pendant un temps donné, entre deux valeurs données encadrant une valeur de consigne représentative de l'épaisseur désirée.

Avantageusement, un polariseur est interposé sur la trajet du faisceau de la source monochromatique ou quasi monochromatique.

Pour rendre photométrique la mesure, et assurer une parfaite reproductibilité malgré des lumières parasites, un calibre permettant de régler le 0 et le 100% de l'intensité du faisceau lumineux réfléchi par la couche, est interposé entre le hublot d'étanchéité et la couche.

L'invention va être précisée par la description ci-après d'un mode préféré de réalisation de l'invention, en référence au dessin annexé dans lequel

—la figure 1 est un schéma du dispositif de l'invention,

—la figure 2 est un schéma du circuit électronique du dispositif

—la figure 3 est un diagramme en fonction du temps du signal élaboré par le dispositif de l'invention.

L'exemple décrit est celui de la gravure par attaque par plasma, d'une couche placée sur un support et partiellement masquée par un masque.

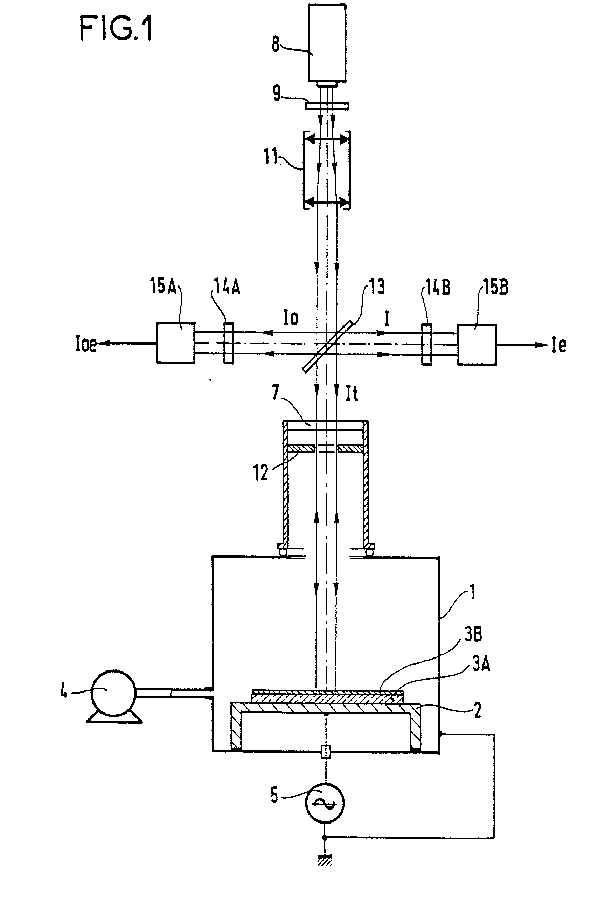

Dans la figure 1, la référence 1 représente une enceinte dans laquelle est placée, sur un support 2, la pièce à graver qui comprend un substrat 3A et une couche 3B. Un groupe de pompage 4 assure le vide convenable dans l'enceinte. Un générateur haute fréquence 5 établit entre le support 2 et la paroi de l'enceinte (ou en variante une électrode), une tension génératrice d'un plasma. L'enceinte comporte un hublot 7.

Une source de lumière monochromatique 8, tel qu'un laser hélium-néon, envoie un faisceau de lumière en direction de la pièce, à travers le hublot.

Avantageusement, on interpose un polariseur 9 sur le trajet du faisceau lumineux si le laser n'est pas polarisé; la largeur du faisceau est réglée au moyen d'un dispositif optique expanseur 11.

Selon une particularité de l'invention, un séparateur de lumière 13, constitué avantageusement d'une lame de verre traitée disposée à 45 degrés sur le faisceau, sépare le faisceau lumineux en une première partie lo qui est réfléchie sur la lame et une partie lt qui traverse la lame, La partie transmise lt après traversés du hublot, réflexion sur la pièce à graver, seconde tranversée du hublot est à son tour réflechie sur le séparateur 13; soit I son intensité après cette réflexion.

Les faisceaux lo et I sont envoyés, après traversée si nécessaire de filtres interférentiels 14A et 14B, sur des convertisseurs optoélectroniques linéaires 15A et 15B, tels que des diodes photo-conductrices ou photo-voltaïques.

Les signaux lumineux lo et I sont donc convertis en signaux électriques proportionnels, respectivement loe et le.

On sait qu'en raison des phénomènes d'interférence au niveau de la couche à graver, le faisceau lumineux sortant de l'enceinte présente une allure périodique avec des extrema correspondant à des différences de chemin optique égales à $\lambda$)2n, où $\lambda$ est la longueur d'ondes de la lumière utilisée et n l'indice de réfraction du matériau gravé.

En fin de gravure, l'amplitude du faisceau lumineux cesse d'osciller pour devenir croissante de manière continue.

L'examen de signal I, ou mieux de sa dérivée I' permet donc de connaître la fin d'attaque.

Selon l'invention, ce n'est pas les signaux I on I' qui sont examinés, mais les rapports corrigés

$$\frac{I}{Io} \text{ et } \left(\frac{I}{Io}\right)'.$$

dans lesquels on a éliminé l'influence de la lumière parasite (voir ci-aprés)

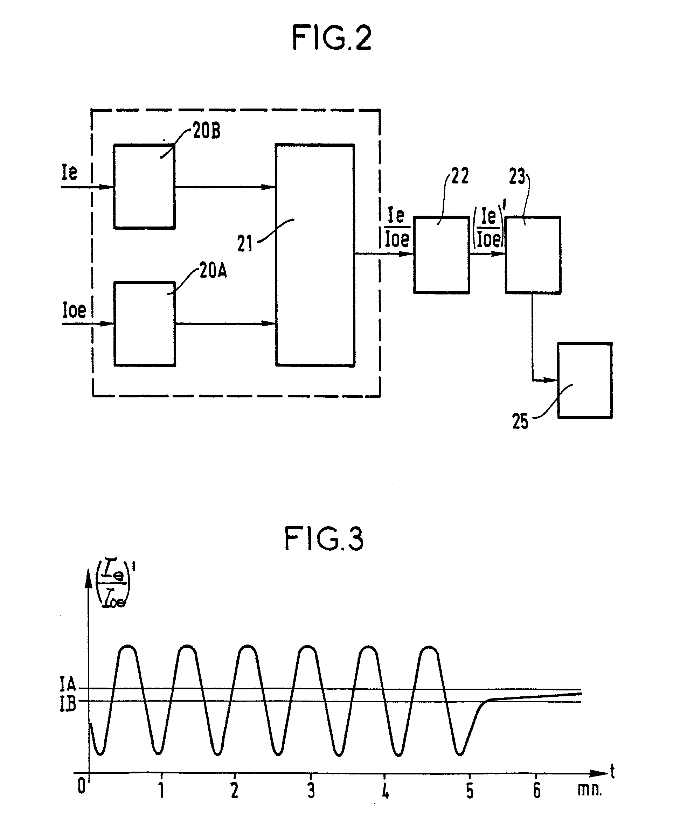

En pratique, comme le montre le schéma de la figure 2, les signaux électriques loe et le sont amplifiés et filtrés au moyen d'amplification 20A et 20B, et envoyé sur un diviseur 21 qui fournit en sortie un signal égal à

$$\frac{le}{loe} = \frac{KI}{lo}.$$

L'intérêt d'utiliser le rapport précédent est d'éliminer les variations éventuelles du signal lumineux émis par le laser, soit au cours de sa période de mise en température après démarrage, soit en raison de son vieillissement.

Un calibre 12 est disposé dans l'enceinte sous le hublot 7. Il permet de laisser passer une fraction donnée du faisceau réfléchi (entre 0 et 100%) et il est utilisé pour le réglage des seuils, et pour éliminer la lumière parasite en réglant sur la position 0% le zéro de la division à l'aide d'une compensation électrique.

Pour obtenir le signal de fin d'attaque le signal

$$\frac{le}{loe}$$

corrigé, éventuellement amplifié, est dérivé au moyen d'un circuit électronique 22 de préférence numérique.

Un calculateur numérique 23 convenablement programmé reçoit l'information du circuit 22 et compare par exemple sa valeur à deux valeurs fixes prédéterminées. Lorsque le signal est resté compris entre ces deux valeurs pendant un temps fixé par avance (par exemple 7 à 8 secondes) c'est que la couche à graver a complètement disparue; un signal de fin d'attaque commandant une alarme 25 est alors émis par le calculateur et les automatismes pilotés en conséquence.

Le diagramme de la figure 3 montre en fonction du temps t, gradué en minutes, la variation du signal

$$\left(\frac{le}{loe}\right)'.$$

Les valeurs IA et Ib sont obtenues expérimentalement en mesurant par exemple le rapport

$$\left(\frac{le}{loe}\right)'$$

avec une pièce comportant le seul support et en calculant deux valeurs autour de cette mesure.

Le calculateur peut être programmé pour fournir une valeur absolue de l'épaisseur e ôtée ou une valeur de la vitesse V de gravure. On montre en effet que les valeurs e et V sont des fonctions calculables de

$$\frac{I}{lo} \text{ et de} \left(\frac{I}{lo}\right)'.$$

L'invention s'applique, non seulement au contrôle de la gravure de couche comme il vient d'être décrit, mais également au contrôle du dépôt de couches sur un substrat. Il suffit de remplacer dans ce qui précède les mots "gravure" par "dépôt" et "(couche) ôtée par "(couche) déposée".

**Revendications**

1. Dispositif de contrôle d'épaisseur d'une couche mince (3B) faiblement absorbante sur un support (3A), partiellement ou totalement réfléchissant, par l'intermédiaire d'un faisceau lumineux monochromatique ou quasi monochromatique dirigé sur la couche, caractérisé en ce qu'il comprend:

—un séparateur (13) de lumière partageant le faisceau en deux parties, une première partie (lo) étant dirigée sur un premier convertisseur optoélectronique linéaire (15A) fournissant un premier signal électrique (loe), une seconde partie (lt) du faisceau étant dirigée sur la couche, s'y réfléchissant et étant dirigée sur un second convertisseur linéaire optoélectronique (15B) fournissant un second signal électrique (le),

—un moyen pour effectuer le rapport du second signal électrique au premier signal électrique,

—un moyen pour obtenir la dérivée dudit rapport,

—un moyen pour fournir un signal lorsque ladite dérivée est restée comprise, pendant un temps donné, entre deux valeurs données encadrant une valeur de consigne représentative de l'épaisseur désirée.

2. Dispositif selon la revendication 1, caractérisé en ce qu'un polariseur (9) est interposé sur le trajet du faisceau lumineux.

3. Dispositif selon l'une des revendications 1 et 2, caractérisé en ce qu'un calibre (12) permettant de faire varier de 0 à 100% l'intensité du faisceau lumineux, est interposé sur le trajet du faisceau réfléchi par la couche.

**Patentansprüche**

1. Vorrichtung zur Kontrolle der Dicke einer dünnen, schwach absorbierenden Schicht (3B) auf einem teilweise oder total reflektierenden Träger (3A), mittels eines auf die Schicht gerichteten monochromatischen oder fast monochromatischen Lichtstrahls, dadurch gekennzeichnet, daß sie aufweist:

—einen Lichtseparator (13), der den Strahl in zwei Teile teilt, wobei ein erster Teil (Io) auf einen ersten linearen optoelektronischen Wandler (15A) gerichtet ist, der ein erstes elektrisches Signal (Ioe) liefert, und ein zweiter Teil (It) des Strahls auf die Schicht gerichtet ist, dort reflektiert wird und auf einen zweiten linearen optoelektronischen Wandler (15B) fällt, der ein zweites elektrisches Signal (Ie) liefert,

—ein Mittel, um das Verhältnis zwischen dem zweiten elektrischen Signal und dem ersten elektrischen Signal zu ermitteln,

—ein Mittel, um die Ableitung dieses Verhältnisses zu erhalten,

—ein Mittel, um ein Signal zu liefern, wenn die Ableitung während eines bestimmten Zeitraums zwischen zwei gegebenen Werten geblieben ist, die zu beiden Seiten eines für die gewünschte Dicke repräsentativen Bezugswert liegen.

2. Vorrichtung nach Anspruch 1, dadurch gekennzeichnet, daß ein Polarisator (9) in die Strecke des Lichtstrahls eingefügt ist.

3. Vorrichtung nach einem der Ansprüche 1 und 2, dadurch gekennzeichnet, daß eine Blende (12), die es ermöglicht, die Intensität des Lichtstrahls zwischen 0 und 100% zu variieren, in die Strecke des von der Schicht reflektierten Strahls eingefügt ist.

**Claims**

1. A device for controlling the thickness of a thin absorbing layer (3B) of a low absorption power on a partially or totally reflecting layer (3A), via a monochromatic or quasi monochromatic light beam which is directed onto the layer, characterized in that it comprises:

—a light separator (13) which divides the beam into two parts, a first part (Io) being directed on a first linear optoelectronic converter (15A) supplying a first electrical signal (Ioe), a second part (It) of the beam being directed on the layer, being reflected on it and being directed to a second linear optoelectronic converter (15B) supplying a second electrical signal (Ie),

—a means for computing the ratio between the second electrical signal and the first electrical signal,

—a means for obtaining the derivation of said relation,

—a means for supplying a signal when said derivation has remained, for a predetermined time, between two given values situated on either side of a reference value of the desired thickness.

2. A device according to claim 1, characterized in that a polariser (9) is interposed on the passage of the light beam.

3. A device according to one of claims 1 and 2, characterized in that a diaphragm (12) permitting to make the intensity of the light beam vary from 0 to 100% is interposed on the passage of the beam reflected by the layer.

# FIG.1

# FIG.2

# FIG.3